# EUROPÄISCHE PATENTSCHRIFT

(11) **EP 2 595 404 B1**
(45) Veröffentlichungstag und Bekanntmachung des Hinweises auf die Patenterteilung: **15.11.2017**
(21) Anmeldenummer: 12192935.0
(22) Anmeldetag: 16.11.2012
(51) Int. Cl.: H04N 21/45, H04N 21/454, H04N 21/84, H04N 21/475, H04N 21/8405

(54) **Multimediavorrichtung**
Multimedia device
Dispositif multimédia

(30) Priorität: 17.11.2011 DE 102011055437
(43) Veröffentlichungstag der Anmeldung: 22.05.2013
(73) Patentinhaber: LOEWE Technologies GmbH, 96317 Kronach (DE)
(72) Erfinder: Schlee, Dieter, 96264 Altenkunstadt (DE)

(56) Entgegenhaltungen:
- EP-A1- 2 242 258
- WO-A2-2005/060424
- DE-U1- 9 400 859
- US-B1- 6 732 367

## Beschreibung

Die vorliegende Erfindung betrifft ein elektronisches Gerät, insbesondere ein Gerät der Unterhaltungselektronik, mit den Merkmalen im Oberbegriff des Patentanspruches 1.

Ein gattungsgemäßes elektronisches Gerät ist aus der WO 2005/060424 A2 bekannt. Diese Schrift offenbart eine Vorrichtung und ein Verfahren zum Blockieren von Programmen unter Verwendung von auswähl- und setzbaren Filtern unterschiedlicher Art. Die Nutzung eines Filters sieht vor, dass Worte definiert werden können, die, falls sie in den Programmdaten einer Sendung enthalten sind, die Darstellung der Sendung verhindern. Dabei erfolgt ein Vergleich von Wörtern mit dem Inhalt von mit einem Programm mit übertragenen Daten ("Close-Captioning-Stream"), wobei der Vergleich der Daten mit bestimmten, ausgewählten Wörtern für einen aktuell empfangenen Sender erfolgt. Zusätzlich können die Filter auch wahlweise zeitlich täglich, wöchentlich, monatlich oder definierten Zuschauern zugeordnet gesteuert aktiviert werden.

Elektronische Geräte, insbesondere Geräte der Unterhaltungselektronik, sind allgemein bekannt. Problematisch bei elektronischen Geräten, insbesondere bei Geräten der Unterhaltungselektronik, ist es, eine einfach handhabbare und dennoch sichere Kinderschutzvorrichtung zu integrieren und diese auszubilden. Eine Kinderschutzsicherung dient zur Verhinderung von Zugriffen auf Sendeinhalte von Sendeanstalten oder von auf Datenträgern gespeicherten oder im Internet zum Download oder Stream bereitgestellten Inhalten, die nicht für ein Kind geeignet sind oder deren Inhalt ein Erziehungs-berechtigter einem Kind vorenthalten will.

Aus DE 295 09 734 U1 sind eine Vorrichtung und ein System zur selektiven, altersstufenabhängigen Sperrung oder Freigabe einer Bild- und/oder Tonwiedergabe von Sendungen sowie eine Vorrichtung zum Eincodieren einer variablen Altersfreigabekennung bekannt. Hierzu wird eine Erkennungseinrichtung verwendet, die zur Erfassung einer im Sendesignal enthaltenen Altersfreigabekennung und zum Vergleich mit einer im System eingestellten oder vorgegebenen, die zugelassene Altersstufe repräsentierenden Altersfreigabe bzw. Referenz dient. Es ist eine Sperreinrichtung vorgesehen, die die Senderwiedergabe sperrt, wenn die Altersfreigabekennung die zugelassene Altersstufen repräsentierende Altersfreigabe/Referenz unterschreitet. Auf diese Weise ist es möglich, anhand von im Sendesignal übertragenen Zusatzinformationen ein elektronisches Gerät, insbesondere ein Gerät der Unterhaltungselektronik, für nicht berechtigte Altersgruppen zu sperren und zu verhindern, dass diese eine entsprechende, nicht ihrem Alter angemessene Sendung ansehen können.

Aus DE 94 00 859 U1 ist eine Kindersicherungssperreinrichtung für Fernseher mit einer programmierbaren Freischaltung für bestimmte Sendungen bekannt. Die Kindersicherungssperreinrichtung ist in der Weise ausgestaltet, dass das an die Kindersicherungssperreinrichtung angeschlossene Fernsehgerät bei aktivierter Kindersicherungssperreinrichtung nur mittels einer festgelegten Zeitprogrammierung mit Strom versorgt wird und darüber hinaus eine Kanalprogrammierung vorgesehen ist, die festlegt, welche Kanäle und welche einem Kanal zugeordnete Sender vom Fernseher wiedergegeben werden dürfen.

Aus DE 10 2009 041 246 A1 ist eine programmierbare Benutzungskontrolleinrichtung für einen Rundfunkempfänger zur Einrichtung und Überwachung von begrenzten Nutzungsrechten für den Empfang von Hörrundfunk- oder Fernsehrundfunkprogrammen bekannt. Die Kontrolleinrichtung ermöglicht bestimmten Nutzern mit einem Administrationsrecht für den Rundfunkempfänger, beispielsweise innerhalb einer Familie den Erwachsenen, für andere definierte Mitnutzer, beispielsweise Kinder, für den Zugang zum Rundfunkempfänger Rundfunkempfangsnutzungseinschränkungen vorzugeben. Die Einschränkung eines Nutzungsrechtes kann anhand verschiedener Kriterien, wie Benutzungszeit, Zeitkontingent oder Inhalt von Programmen oder von einzelnen Programmbeiträgen erfolgen.

US 2004/0175121 A1 offenbart ein elektronisches Gerät, bei welchem die Anzeige von Fernsehprogrammen und damit verbundenen Textinhalten unterbrochen werden kann, wenn in einem in einer elektronischen Programmzeitschrift umfassten Programmbeitrag ein Wort enthalten ist, welches beispielsweise von Eltern ausgewählt worden ist. Die zugeführten Programmdaten werden kontinuierlich übermittelt, wobei der aktuell empfangene Sender überprüft wird.

US 2004/0015985 A1 offenbart eine Einrichtung und ein Verfahren, um Sendungen für Kinder freizuschalten, wobei die Freischaltung entfernt von dem Fernsehgerät über eine Einrichtung der Eltern erfolgt.

US 6,732,367 B1 offenbart ein interaktives FernsehProgramm-Guide-System, wobei Titel und Inhaltsdaten blockiert werden. Hierzu wird eine elektronische Programmzeitschrift bspw. nach Schlagworten durchsucht und der Titel oder der Inhalt werden nicht über einen Bildschirm dargestellt, wenn eines der ausgewählten Schlagworte darin enthalten ist.

Nachteilig bei dem bekannten Stand der Technik ist es, dass keine sichere Beschränkung der Benutzung - bezogen auf die Sendeinhalte - möglich ist, zumal aus dem Stand der Technik nur eine Einschränkung bezüglich eines Alterskennsignals (Altersfreigabeempfehlung), einer zeitlichen Beschränkung oder aber eine Beschränkung anhand vordefinierbarer Fernsehsender oder Kanäle, die dann nicht dargestellt werden können, erfolgt. Aufgabe der vorliegenden Erfindung ist es daher, ein elektronisches Gerät der gattungsgemäßen Art, insbesondere ein Gerät der Unterhaltungselektronik, aufzuzeigen, das anhand vorgebbarer Begriffe, die zur Spezifizierung des Inhalts des Fernsehprogramms oder des Rundfunkprogramms dienen, eine Sperrung eines solchen Fernsehprogramms oder Rundfunkprogramms verbessert und eine einfache Überprüfung der für die Wiedergabe gesperrten Programme unter Berücksichtigung aktualisierter Programmübersichten ermöglicht.

Diese Aufgabe wird anhand der Merkmale des Patentanspruches 1 gelöst. Vorteilhafte Ausgestaltungen der Erfindung und Weiterbildungen der Erfindung ergeben sich anhand der abhängigen Ansprüche, der weiteren Beschreibung und insbesondere der konkreten Beschreibung anhand einer Figur anhand eines konkreten Ausführungsbeispiels.

Die vorliegende Erfindung macht sich hierbei den neueren Stand der Technik, insbesondere die Verwendung eines im elektronischen Gerät implementierten EPGs (Electronic Program Guide; zu Deutsch: elektronische Programmzeitschrift), zunutze.

Es sind mehrere Verfahren und Vorrichtungen zur Erstellung einer elektronischen Programmzeitschrift für Fernseh- und/oder Tonrundfunkprogramme in einem Empfangsgerät für Fernseh- und/oder Tonrundfunksignale bekannt, so beispielsweise aus der DE 10 2005 041 812 B4, welche ein solches Verfahren beschreibt.

Die vorliegende Erfindung verwendet die zu einem Rundfunk- und/oder Fernsehsignal mit übertragenen Zusatzdaten, die die entsprechende Sendung bzw. deren Inhalt oder Sendebeitrag, die von einer Sendeanstalt abgestrahlt wird, näher spezifizieren, um hieraus eine verlässliche Bestimmung abzuleiten, ob ein entsprechendes Rundfunkprogramm vom elektronischen Gerät wiedergegeben, angezeigt und/oder dargestellt oder nicht dargestellt und/oder aufgezeichnet oder nicht aufgezeichnet werden darf. Im Weiteren ist die Erfindung auch anwendbar für bereits im elektronischen Gerät abgespeicherte Fernsehsendungen, wenn beispielsweise das elektronische Gerät eine Festplatte zur Aufzeichnung von Rundfunk- und/oder Fernsehsignalen bzw. deren Inhalten aufweist, sowie für Speichermedien, die entsprechende Rundfunk- und/oder Fernsehsignale bzw. deren Inhalte enthalten, wie beispielsweise DVD-Datenträger, die über ein anschließbares DVD-Abspielgerät abspielbar sind, das im elektronischen Gerät integriert und/oder über eine Schnittstelle anschließbar ist.

Zu diesem Rundfunk- und/oder Fernsehsignal werden Zusatzinformationen bereitgestellt, welche die entsprechende Sendung, das Programm bzw. den Inhalt beschreiben. So sind zumeist eine kurze Inhaltsangabe sowie der Titel der Sendung und/oder des Programms bzw. Programmbeitrags vorhanden. Im Weiteren ist zumeist eine Jugendschutzfreigabekennung enthalten.

Die vorliegende Erfindung greift nunmehr diese Zusatzdaten auf und verwendet diese Zusatzdaten in Form eines Vergleichs mit einem Datensatz, in dem frei wählbar Begriffe eingebbar sind, die die Programme, die Inhalte oder die Sendungen beschreiben, die vom elektronischen Gerät nicht dargestellt und/oder aufgezeichnet werden dürfen.

Will ein Nutzer verhindern, dass vom elektronischen Gerät beispielsweise Trickfilme dargestellt und/oder aufgezeichnet werden, so gibt er in den Datensatz das Wort "Trickfilm" ein. Das elektronische Gerät wird nunmehr sämtliche Titel von Sendungen oder Programmen oder Programmbeiträgen und deren Zusatzdaten untersuchen und wenn das Wort "Trickfilm" in den Zusatzdaten, insbesondere der Beschreibung des Inhalts eines Programms bzw. Programmbeitrags, vorhanden ist, dieses sperren und es nicht darstellen oder aufzeichnen oder eine Darstellung und/oder Aufzeichnung verhindern. Sollen Programme mit erotischem Inhalt nicht vom elektronischen Gerät dargestellt und/oder aufgezeichnet werden, so muss in den Datensatz das Wort oder die Kurzbezeichnung oder die Abkürzung "Erotik" und/oder "Sex" eingegeben werden. Das Rundfunkempfangsgerät wird dann keinen Sendebeitrag oder kein Programm oder Programmbeitrag darstellen und/oder aufzeichnen, welches in den Zusatzdaten eines dieser Worte enthält.

Das erfindungsgemäße elektronische Gerät zeichnet sich insbesondere dadurch aus, dass das elektronische Gerät einen Empfänger zum Empfang von Fernseh- oder Tonrundfunkprogrammen verschiedener Sendeanstalten aufweist, wobei der Empfänger eine Abstimmeinheit zur Abstimmung des Empfängers auf eines der Fernseh- oder Tonrundfunkprogramme der verschiedenen Sendeanstalten beinhaltet. Zusätzlich oder alternativ ist eine erste Speichereinheit zum Speichern von Fernseh- oder Tonrundfunkprogrammen verschiedener Sendeanstalten vorhanden. Es ist eine Darstellungseinheit zur Darstellung der vom Empfänger empfangenen Fernseh- oder Tonrundfunkprogramme oder zur Wiedergabe von Fernseh- oder Tonrundfunkprogrammen von auf einem Speichermedium und/oder in der ersten Speichereinheit gespeicherten Fernseh- oder Tonrundfunkprogrammen vorgesehen. Außerdem ist eine Anwahleinheit vorgesehen, mittels der der Empfänger und/oder die Darstellungseinheit ansteuerbar sind, in der Weise, dass der Empfänger auf eines der Fernseh- oder Tonrundfunkprogramme umschaltet oder die Darstellungseinheit die Darstellung eines der auf dem Speichermedium oder in der ersten Speichereinheit abgespeicherten Fernseh- oder Tonrundfunkprogramme vornimmt. Es ist weiterhin eine Steuereinheit vorhanden, welche die zu den Fernseh- oder Tonrundfunkprogrammen verschiedener Sendeanstalten bereits vor der Aussendung der Fernseh- oder Tonrundfunkprogramme durch eine der Sendeanstalten übertragenen Zusatzdaten und/oder die auf dem Speichermedium oder in der ersten Speichereinheit zu den gespeicherten Fernseh- oder Tonrundfunkprogrammen abgespeicherten Zusatzdaten in einer zweiten Speichereinheit unter Zuordnung des zugehörigen Fernseh- oder Tonrundfunkprogramms in Form jeweils eines Datensatzes abspeichert. Weiterhin ist eine dritte Speichereinheit vorgesehen, in der mittels der Steuereinheit mindestens ein zweiter Datensatz abspeicherbar ist. Die Steuereinheit vergleicht den mindestens einen in der dritten Speichereinheit abspeicherbaren zweiten Datensatz mit den in der zweiten Speichereinheit gespeicherten Datensätzen und markiert einen Datensatz in der zweiten Speichereinheit im Falle einer Übereinstimmung oder zumindest einer Teilübereinstimmung zwischen dem mindestens einen in der dritten Speichereinheit abgespeicherten zweiten Datensatz und dem entsprechenden in der zweiten Speichereinheit gespeicherten Datensatz.

Die Steuereinheit nimmt kontinuierlich und zeitlich entkoppelt von einer Ansteuerung des Empfängers mittels der Auswahleinheit zur Anwahl eines Fernseh- oder Tonrundfunkprogramms einer der verschiedenen Sendeanstalten oder einer Anwahl der Darstellung eines der auf dem Speichermedium oder im Speicher gespeicherten Fernseh- oder Tonrundfunkprogramme den Vergleich des mindestens einen zweiten Datensatzes mit den in der zweiten Speichereinheit gespeicherten Datensätzen vor. Hierdurch kann auch während einer Nichtbenutzung des elektronischen Gerätes der Vergleich der programmbegleitenden Informationen von in der zweiten Speichereinheit gespeicherten Datensätzen mit dem Inhalt des Datensatzes der dritten Speichereinheit erfolgen. Außerdem wird dadurch gewährleistet, dass Änderungen in den Zusatzdaten kontinuierlich miterfasst werden, so etwa Veränderungen der Sendeinhalte von Fernseh- oder Tonrundfunkprogrammen oder zeitliche Verschiebungen. Außerdem ist die Markierung der Datensätze in der zweiten Speichereinheit stets aktualisiert und der Vergleich der Datensätze, der durchaus zeitintensiv sein kann, ist von dem Vorgang der Umschaltung auf oder der Anwahl eines Fernseh- oder Tonrundfunkprogramms oder eines gespeicherten Sendeinhalts entkoppelt. Die Steuereinheit überprüft sodann nur, ob der einem Sendebeitrag zugehörige Datensatz markiert ist oder nicht. Im Falle einer Markierung wird die Umschaltung oder die Anwahl nicht vorgenommen.

Im Falle einer Ansteuerung des Empfängers mittels der Auswahleinheit zur Anwahl eines Fernseh- oder Tonrundfunkprogramms einer der verschiedenen Sendeanstalten oder im Falle der Anwahl der Darstellung eines der auf dem Speichermedium oder in der ersten Speichereinheit gespeicherten Fernseh- oder Tonrundfunkprogramme oder der Ansteuerung zur Anzeige der Zusatzdaten mittels der Auswahleinheit nimmt die Steuereinheit die Ansteuerung des Empfängers oder die Anwahl der Darstellung, auch der Zusatzdaten, nicht vor, wenn der in der zweiten Speichereinheit gespeicherte, dem angewählten Fernseh- oder Tonrundfunkprogramm zugehörige Datensatz markiert ist. Hierdurch wird gewährleistet, dass vor jeder Ansteuerung des Empfängers mittels der Auswahleinheit zur Anwahl eines Fernseh- oder Tonrundfunkprogramms einer der verschiedenen Sendeanstalten oder im Falle der Anwahl der Darstellung eines der auf dem Speichermedium oder in der ersten Speichereinheit gespeicherten Fernseh- oder Tonrundfunkprogramme eine Überprüfung durch die Steuereinheit erfolgt. Es wird insbesondere auch verhindert, dass die Zusatzdaten zu Fernseh- oder Tonrundfunkprogramme angezeigt werden, wenn der zugehörige Datensatz markiert ist. Somit wird auch unterbunden, dass Zusatzdaten, insbesondere Texte, Inhaltsangaben oder Zusatzapplikationen dargestellt werden.

Die Steuereinheit löscht einen in der zweiten Speichereinheit gespeicherten Datensatz, wenn das zugehörige Sendedatum und die Sendezeit um mehr als ein einstellbares erstes Zeitdelay überschritten sind oder wenn die Sendeendzeit erreicht und/oder um ein einstellbares zweites Zeitdelay überschritten ist. Hierdurch ist gewährleistet, dass die zweite Speichereinheit nicht überläuft, da "veraltete" Datensätze automatisch gelöscht werden. Zugleich wird durch das Löschen von "veralteten" Datensätzen der Vergleichsaufwand beim Vergleich der Datensätze reduziert.

Die Steuereinheit löscht einen in der zweiten Speichereinheit gespeicherten Datensatz, wenn das zugehörige Fernseh- oder Tonrundfunkprogramm in der Speichereinheit gelöscht ist oder wenn das zugehörige Speichermedium entfernt ist. Hierdurch ist gewährleistet, dass Datensätze, die zu gespeicherten Fernseh- oder Tonrundfunkprogrammen gehören, gelöscht werden, wenn die Fernseh- oder Tonrundfunkprogramme gelöscht sind.

Vorteilhaft nach Patentanspruch 2 ist, dass die Zusatzdaten programmbegleitende Informationen und/oder Metadaten sind und/oder dass der mindestens eine zweite Datensatz mindestens ein Wort oder ein Begriff oder eine Abkürzung ist. Durch die Verwendung der Zusatzdaten, die programmbegleitende Informationen und/oder Metadaten sind, ist es möglich, die von den Sendeanstalten oder Drittanbietern zu den Fernseh- oder Tonrundfunkprogrammen verschiedener Sendeanstalten bereitgestellten Daten in einem bekannten Format zu verwenden und diese ggf. zu konvertieren. Außerdem kann somit auf bereits bestehende Konzepte zur Speicherung und Verarbeitung von solchen Daten zurückgegriffen werden.

Vorteilhaft nach Patentanspruch 3 ist, dass die Steuereinheit die Zuordnung des Fernseh- oder Tonrundfunkprogramms zu den jeweiligen Zusatzdaten durch Abspeicherung des Namens und/oder der Servicekennzahlen der Sendeanstalt, des Sendedatums und der Sendezeit und/oder der Sendedauer und/oder der Sendeendzeit zum Datensatz vornimmt. Hierdurch ist eine eindeutige Zuordnung der Datensätze zu Fernseh- oder Tonrundfunkprogrammen gegeben.

Vorteilhaft nach Patentanspruch 4 ist, dass die Steuereinheit die Zuordnung des Fernseh- oder Tonrundfunkprogramms zu den jeweiligen Zusatzdaten der auf einem Speichermedium oder in der ersten Speichereinheit gespeicherten Fernseh- oder Tonrundfunkprogramme durch eine Zuweisung des Speicherortes zum jeweiligen Datensatz vornimmt. Hierdurch kann die Steuereinheit erkennen, ob es sich um gespeicherte Inhalte von Fernseh- oder Tonrundfunkprogrammen handelt.

Gemäß einer vorteilhaften Ausgestaltung der Erfindung nach Patentanspruch 5 ist vorgesehen, dass eine Zeitgebereinheit vorhanden ist, anhand welcher die Steuereinheit die aktuelle Systemzeit ermittelt, oder dass die Steuereinheit anhand der von einer Sendeanstalt bereitgestellten Zusatzdaten die aktuelle Systemzeit ermittelt.

Gemäß einer vorteilhaften Ausgestaltung der Erfindung nach Patentanspruch 6 ist vorgesehen, dass die Steuereinheit im Falle einer Verhinderung oder eines Nichtzulassens einer Anwahl eines Fernseh- oder Tonrundfunkprogramms einen Hinweis auf der Darstellungseinheit einblendet.

Gemäß einer vorteilhaften Ausgestaltung der Erfindung nach Patentanspruch 7 ist vorgesehen, dass die Steuereinheit die Anwahl und/oder Darstellung eines Fernseh- oder Tonrundfunkprogramms verhindert, wenn keine Zusatzdaten zu diesem Fernseh- oder Tonrundfunkprogramm vorhanden sind.

Gemäß einer vorteilhaften Ausgestaltung der Erfindung nach Patentanspruch 8 ist vorgesehen, dass der in der dritten Speichereinheit mittels der Steuereinheit abspeicherbare mindestens eine Datensatz, der mindestens aus einem Wort oder einem Begriff oder einer Abkürzung besteht, wobei dieses Wort oder dieser Begriff oder diese Abkürzung anhand einer im elektronischen Gerät hinterlegten Liste auswählbar ist und/oder über ein Speichermedium, das über eine erste Schnittstelle anschließbar ist, einspeicherbar ist und/oder anhand einer über eine zweite Schnittstelle anschließbaren Eingabeeinheit eingebbar ist.

Gemäß einer vorteilhaften Ausgestaltung der Erfindung nach Patentanspruch 9 ist vorgesehen, dass das elektronische Gerät ein Gerät der Unterhaltungselektronik, ein TV-Gerät, ein Satellitensignalempfangsgerät, DVB-Empfangsgerät oder ein Teil eines solchen Gerätes ist.

Im Folgenden wird die Erfindung anhand eines konkreten Ausführungsbeispiels anhand einer Figur näher erläutert. Die Beschreibung der Erfindung anhand des konkreten Ausführungsbeispiels stellt keine Limitierung der Erfindung auf dieses konkrete Ausführungsbeispiel dar. Das Ausführungsbeispiel zeigt die Erfindung anhand einer Ausführungsdarstellung in einer spezifischen Ausgestaltung.

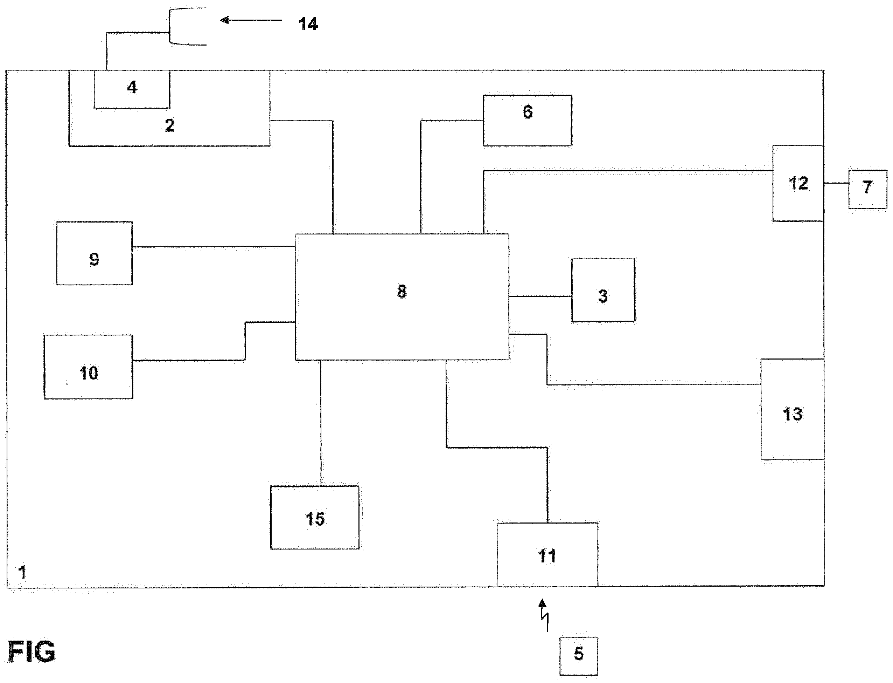

Es zeigt die einzige Figur FIG einen schematischen Aufbau eines erfindungsgemäßen TV-Gerätes.

In der einzigen Figur FIG des Ausführungsbeispiels ist das TV-Gerät 1 dargestellt. Das TV-Gerät 1 weist einen Empfänger 2 auf, der eine Abstimmeinheit 4 beinhaltet. An die Abstimmeinheit 4 ist eine Antenne 14 angeschlossen. Über die Antenne 14 sind die entsprechenden Rundfunk- und Fernsehprogramme, die z.B. via Satellit oder terrestrisch übertragen werden, empfangbar. Der Empfänger 2 kann aber auch als Kabeltuner ausgebildet sein, so dass die in einem Kabelnetzwerk übertragenen bzw. bereitgestellten Rundfunk- und Fernsehprogramme empfangbar sind.

In einer weiteren Ausgestaltung ist der Empfänger 2 in der Weise ausgeführt, dass er einen Internetzugang repräsentiert, über welchen die entsprechenden Rundfunkprogramme oder Beiträge im Internet empfangbar sind.

Im Weiteren wird zur Vereinfachung der Beschreibung die Erfindung anhand der Ausführung eines Empfängers 2 zum Empfang von Satellitenrundfunk- und Satellitenfernsehsignalen dargestellt.

Das TV-Gerät 1 weist eine Darstellungseinheit 3 auf. Bei der Darstellungseinheit 3 handelt es sich vorzugsweise um ein LCD-Display, mittels welches Programminhalte visuell darstellbar sind. Natürlicherweise ist auch eine akustische Ausgabeeinheit in Form von Lautsprechern anschließbar oder bereits im Gerät integriert; diese ist jedoch nicht erfindungswesentlich und daher in der Figur FIG nicht dargestellt.

Im Weiteren ist eine Anwahleinheit 5 vorhanden, die in der konkreten Ausführung des Ausführungsbeispiels eine Fernbedienungseinheit ist. Die Fernbedienungseinheit korrespondiert mit einem Fernbedienungsempfänger 11, der vorzugsweise als Infrarotempfänger ausgebildet ist. Über die Anwahleinheit 5 ist das TV-Gerät 1 steuerbar. Es kann mit der Anwahleinheit 5 eine Programmumschaltung zwischen einzelnen, vom TV-Gerät 1 empfangbaren Rundfunkprogrammen initiiert werden. Im Weiteren können über die Anwahleinheit 5 auch im TV-Gerät 1 in einer ersten Speichereinheit 6 gespeicherte oder abspeicherbare Rundfunkprogramme oder Fernsehprogramme bzw. deren Inhalte angewählt werden. Darüber hinaus kann über eine erste Schnittstelle 12 ein externes Speichermediumwiedergabegerät, wie beispielsweise ein DVD-Player, oder ein Speichermedium 7 direkt angeschlossen werden. Außerdem kann über eine zweite Schnittstelle 13 ein weiteres Medium, beispielsweise eine externe Festplatte, vorzugsweise durch Anschluss über eine eSATA-Schnittstelle oder eine USB-Schnittstelle, angeschlossen werden und auf auf dieser Datenspeichereinheit gespeicherte Inhalte von Rundfunk- oder Fernsehprogrammen zugegriffen und in das TV-Gerät 1 eingespielt und dort auf der Darstellungseinheit 3 wiedergegeben werden. Darüber hinaus können auch über eine nicht dargestellte drahtlose Verbindung, beispielsweise Bluetooth oder W-LAN, Daten mit Rundfunkprogrammsendungsinhalten in das TV-Gerät 1 eingespielt und auf dessen Darstellungseinheit 3 wiedergegeben werden.

Das TV-Gerät 1 weist eine zentrale Steuereinheit 8 auf, welche die wesentlichen Funktionen des TV-Gerätes 1 steuert. Es können aber auch mehrere Steuereinheiten vorhanden sein, die dann hierarchisch aufgebaut sind und die die einzelnen Einheiten des TV-Gerätes 1 steuern und miteinander kommunizieren.

Die Steuereinheit 8 empfängt über den Empfänger 2 Rundfunk- und/oder Fernsehsignale und zugehörige Zusatzdaten zu den entsprechenden Sendeinhalten und Programmen. Hieraus erstellt die Steuereinheit 8 einen EPG. Die Steuereinheit 8 erstellt den EPG anhand der Zusatzdaten und/oder programmbegleitenden Informationen oder Metadaten, die jeweils von den Sendeanstalten zu den zugehörigen Sendeinhalten mitübertragen oder bereitgestellt werden.

Im Weiteren sind bereits einzelne Rundfunk- und/oder Fernsehkanäle oder Provider via Internet bekannt, die EPG-Daten für Sender übertragen oder bereitstellen. Anhand dieser Zusatzdaten generiert die Steuereinheit 8 in einer zweiten Speichereinheit 9 Datensätze, die die einzelnen Sendeanstalten und deren übertragene Rundfunk- und/oder Fernsehprogramme mit den zugehörigen Zusatzdaten, wie Programminformationen, Sendeanfang, Sendezeit, Sendedatum, Sendeende, Länge des Programmbeitrags spezifizieren. Die Steuereinheit 8 speichert nunmehr in der zweiten Speichereinheit 9 zu jedem Programmbeitrag einen entsprechenden Datensatz mit den dem Programmbeitrag zugehörigen Daten. Bei Programmbeiträgen, die nicht über den Empfänger 2 empfangen werden, sondern bereits in der Speichereinheit 6 enthalten sind oder aber über eine externe Schnittstelle 12, 13 zugeführt werden, wie beschrieben anhand einer extern anschließbaren Speichereinheit 7 oder eines DVD-Abspielgerätes, übernimmt die Steuereinheit 8 von dort, soweit vorhanden, die Zusatzdaten und speichert diese, wie vorbeschrieben, ab.

Alternativ kann die Steuereinheit 8 nur einen Link zu diesen Zusatzdaten abspeichern.

Darüber hinaus wird hier zusätzlich der Speicherort bzw. die Bezugsquelle angegeben. Im Weiteren kann nunmehr ein Nutzer in eine dritte Speichereinheit 10 einen Datensatz eingeben oder dort einen Datensatz anlegen, der mit Worten, Begriffen oder Abkürzungen füllbar ist, die die Programmbeiträge oder deren Zusatzinformationen spezifizieren, die nicht vom TV-Gerät 1 dargestellt und/oder empfangen und/oder gespeichert werden sollen. In diesen Datensatz kann ein Nutzer nunmehr Begriffe eingeben, mit welchen er eine Kindersicherung generieren will. So kann er dort frei wählbare Wörter, Abkürzungen, Begriffe eingeben. Im Folgenden will ein Nutzer verhindern, dass Programmbeiträge mit erotischem Inhalt oder aufregenden Sequenzen oder Zeichentrick- oder Animationsbeiträge durch das TV-Gerät 1 dargestellt und/oder empfangen und/oder gespeichert werden. Hierzu gibt der Nutzer dann beispielsweise die Worte "Sex", "Erotik", "Thriller", "Zeichentrick", "Animation" usw. ein.

Die Steuereinheit 8 vergleicht nun kontinuierlich und unabhängig von der Anwahl eines Rundfunk- oder Fernsehprogramms oder eines ein Rundfunk- oder Fernsehprogramm repräsentierenden Sendeplatzes den Inhalt des Datensatzes der dritten Speichereinheit 10 und jedes der jeweils dort angegebenen Begriffe, Worte und Abkürzungen einzeln mit den Datensätzen in der zweiten Speichereinheit 9, welche die Zusatzdaten zugeordnet zu jedem Programmbeitrag oder -inhalt repräsentieren. Wird nunmehr eine Übereinstimmung oder eine Teilübereinstimmung durch die Steuereinheit 8 festgestellt, so wird der jeweilige Datensatz in der zweiten Speichereinheit 9 markiert. Der einem markierten Datensatz zugehörige Programmbeitrag oder -inhalt wird von der Steuereinheit 8 nicht dargestellt oder gespeichert und/oder empfangen.

In einer weiteren vorteilhaften Ausgestaltung der Erfindung kann der Nutzer auswählen, ob ein zugehöriger Programmbeitrag oder -inhalt eines markierten Datensatzes entweder nicht von der Steuereinheit 8 dargestellt wird oder ob er nicht empfangen wird oder ob er nicht gespeichert wird oder ob er empfangen und gespeichert wird, aber nicht dargestellt wird, usw. Eine jede Kombination ist auswählbar.

Der Vergleich des Datensatzes der dritten Speichereinheit 10 und der einzelnen Datensätze der zweiten Speichereinheit 9 erfolgt durch die Steuereinheit 8 in der Weise, dass diese jedes Wort, jede Abkürzung, jeden Begriff des Datensatzes einzeln mit jedem Wort eines jeden Datensatzes der zweiten Speichereinheit 9 vergleicht. Ist in einem Datensatz in der Speichereinheit 9 ein Wort, das im Datensatz der dritten Speichereinheit 10 gespeichert ist, vorhanden, so wird dieser Datensatz in der zweiten Speichereinheit 9 markiert. Eine einfache Markierung kann dadurch erfolgen, dass ein Flag zum Datensatz gesetzt wird. Beim Vergleich wird aber auch dann eine Markierung gesetzt, wenn ein Wort aus dem Datensatz der dritten Speichereinheit 10 in einem Wort eines Datensatzes in der zweiten Speichereinheit 9 enthalten ist. Ist im Datensatz der dritten Speichereinheit 10 das Wort "Erotik" enthalten, so wird ein Datensatz in der zweiten Speichereinheit 9 markiert, wenn dort das Wort "Erotikfilm" vorhanden ist. Es liegt eine Übereinstimmung des Suchbegriffes "Erotik" mit dem Begriff "Erotikfilm" vor.

Enthält der Datensatz in der dritten Speichereinheit 10 unter anderem das Wort "Trickfilm", so wird in der zweiten Speichereinheit 9 jeder Datensatz markiert, der das Wort "Trickfilm" beinhaltet. Auf diese Weise kann durch eine freie Auswahl und Bestimmung der Worte und Begriffe eine relativ sichere Ausschlussmöglichkeit von Sendebeiträgen erfolgen, die das TV-Gerät 1 nicht anzeigen soll, ohne dass die Jugendfreigabekennung zu überwachen ist. Diese kann aber zusätzlich in die Überwachung einbezogen werden.

Es ist folglich möglich, durch die Eingabe von "Schlüsselworten" in den Datensatz der dritten Speichereinheit 10 eine Kindersicherung des TV-Gerätes 1 durch die vorher beschriebene Erfindung vorzunehmen.

Eine Eingabe der "Schlüsselworte" in den Datensatz der dritten Speichereinheit 10 kann beispielsweise dadurch erfolgen, dass im TV-Gerät 1 eine Liste mit auswählbaren und/oder anwählbaren Begriffen oder Worten hinterlegt und auf der Darstellungseinheit 3 darstellbar und über die Anwahleinheit bzw. Bedieneinheit 5 auswählbar ist. Alternativ oder zusätzlich dazu können die "Schlüsselworte" unter Verwendung einer angeschlossenen Tastatur eingegeben werden. Alternativ oder zusätzlich dazu kann die Eingabe der Schlüsselworte unter Verwendung eines anschließbaren Datenträgers, auf dem die entsprechenden Begriffe oder Worte gespeichert sind, vorgenommen werden. Vorzugsweise handelt es sich hierbei um eine Textdatei, die dann in das TV-Gerät 1 übertragbar und entsprechend abspeicherbar ist.

Das TV-Gerät 1 wird nunmehr bei Anwahl eines entsprechenden Sendebeitrags, sprich einer Sendeanstalt und eines zugehörigen Sendebeitrags und/oder eines bereits gespeicherten Sendebeitrags zunächst überprüfen, ob der zugehörige Datensatz zu dieser Sendung in der zweiten Speichereinheit 9 markiert ist. Ist dies der Fall, werden die Darstellung und/oder der Empfang dieses angewählten Fernsehprogramms verhindert. Liegt keine Markierung vor, so werden der Empfang und/oder die Darstellung freigestellt und der Nutzer kann diese Sendung ansehen. Vorteilhaft hierbei ist, dass unabhängig davon, ob eine angewählte Programmumschaltung zusätzlich erfolgt oder nicht, die Freigabeüberprüfung erfolgt. Wird beispielsweise ein erster Sendebeitrag, der von einer Sendeanstalt übertragen wird, als nicht markiert dargestellt und folgt anschließend ein markierter Sendebeitrag, so wird, sobald dieser Sendebeitrag zeitlich aktuell ist, die Darstellung unterbunden.

Um dies zu gewährleisten, überprüft die Steuereinheit 8, sobald ein markierter Beitrag zeitlich ansteht, ob dieser entsprechende Sender angewählt ist oder angewählt wird. Ist dies der Fall wird der Sendebeitrag gesperrt und nicht dargestellt. Insoweit wird auch ein Sendebeitrag, der zunächst frei ist, gesperrt, wenn sich an diesen unmittelbar anschließend ein gesperrter Sendebeitrag befindet.

Im Weiteren ist vorgesehen, dass die Steuereinheit 8 automatisch und kontinuierlich die Datensätze in der zweiten Speichereinheit 9, wenn diese zeitlich abgelaufen sind, löscht. Hierzu ist vorgesehen, dass ein Zeitdelay einstellbar ist, beispielsweise vier, fünf oder sechs Stunden nach dessen Verstreichen ein entsprechender Datensatz aus der zweiten Speichereinheit 9 gelöscht wird. Da die Zusatzdaten zumeist 14 Tage im Voraus übertragen werden, ist der Speicherbedarf, der benötigt wird, um die Datensätze zu speichern, von überschaubarer Größe.

In einer weiteren vorteilhaften Ausgestaltung der Erfindung wird auch die Anzeige der Zusatzdaten selbst, also der Text zum EPG, Zusatzapplikationen, wie Bilder oder andere Textinformationen, beispielsweise HbbTV oder Teletext, nicht dargestellt, wenn der zugehörige Datensatz markiert ist. Es wird insbesondere so verhindert, dass die Zusatzdaten zu Fernseh- oder Tonrundfunkprogramme angezeigt werden, wenn der zugehörige Datensatz markiert ist. Somit wird auch unterbunden, dass Zusatzdaten, insbesondere Texte, Inhaltsangaben oder Zusatzapplikationen, dargestellt werden.

In einer weiteren vorteilhaften Ausgestaltung der Erfindung ist die erste Speichereinheit 6 und/oder die zweite Speichereinheit 9 und/oder die dritte Speichereinheit 10 ein Speicherteilbereich einer Speichereinheit.

In einer vorteilhaften Ausgestaltung der Erfindung ist die Steuereinheit 8 in Form eines Mikroprozessors, einer Mikroprozessoreinheit, eines Mikrocomputers, einer Mikrocomputereinheit, eines Controllers, einer Controllereinheit oder einer Mikrocontrollereinheit ausgestaltet.

In einer weiteren vorteilhaften Ausgestaltung der Erfindung ist die Anwahleinheit 5 als Fernbedienungsgeber, als Eingabeeinheit, integriert in das elektronische Gerät, als Smartphone, als Tablet-PC oder als iPhone ausgestaltet.

### Bezugszeichenliste

- 1: elektronisches Gerät
- 2: Empfänger
- 3: Darstellungseinheit
- 4: Abstimmeinheit
- 5: Anwahleinheit
- 6: erste Speichereinheit
- 7: Speichermedium
- 8: Steuereinheit
- 9: zweite Speichereinheit
- 10: dritte Speichereinheit
- 11: Infrarotempfänger
- 12: erste Schnittstelle
- 13: zweite Schnittstelle
- 14: Antenne
- 15: Zeitgebereinheit

## Patentansprüche

1. Elektronisches Gerät (1) aufweisend
- einen Empfänger (2) zum Empfang von Fernseh- oder Ton¬rundfunkprogrammen verschiedener Sendeanstalten, wobei
- der Empfänger (2) eine Abstimmeinheit (4) zur Abstimmung des Empfängers (2) auf eines der Fernseh- oder Tonrund¬funkprogramme der verschiedenen Sendeanstalten beinhal¬tet, und/oder
- eine erste Speichereinheit (6) zum Speichern von Fern¬seh- oder Tonrundfunkprogrammen verschiedener Sende¬an¬stalten, und
- eine Darstellungseinheit (3) zur Darstellung der vom Empfänger (2) empfangenen Fernseh- oder Tonrundfunkpro¬gramme oder zur Wiedergabe von Fernseh- oder Tonrundfunk¬programmen von auf einem Speichermedium (7) und/oder in der ersten Speichereinheit (6) gespeicherten Fernseh- oder Tonrundfunkprogrammen, und
- eine Anwahleinheit (5), mittels der der Empfänger (2) und/oder die Darstellungseinheit (3) ansteuerbar sind, in der Weise, dass der Empfänger (2) auf eines der Fernseh- oder Tonrundfunkprogramme umschaltet oder die Darstel¬lungseinheit (3) die Darstellung eines der auf dem Spei¬chermedium (7) oder in der ersten Speichereinheit (6) ab¬gespeicherten Fernseh- oder Tonrundfunkprogramme vor¬nimmt, und
- eine Steuereinheit (8), welche die zu den Fernseh- oder Tonrundfunkprogrammen verschiedener Sendeanstalten übertragenen Zusatzdaten und/oder die auf dem Speicherme¬dium (7) oder in der ersten Speichereinheit (6) zu den gespeicherten Fernseh- oder Tonrundfunkprogrammen abge¬speicherten Zusatzdaten in einer zweiten Speichereinheit (9) unter Zuordnung des zugehörigen Fernseh- oder Ton¬rundfunkprogramms in Form jeweils eines Datensatzes ab¬speichert, und
- eine dritte Speichereinheit (10), in der mittels der Steuereinheit (8) mindestens ein zweiter Datensatz abspeicherbar ist, wobei
die Steuereinheit (8) den mindestens einen in der dritten Speichereinheit (10) abspeicherbaren zweiten Da¬tensatz mit den in der zweiten Speichereinheit (9) ge¬speicherten Datensätzen vergleicht und im Falle einer Übereinstimmung die Ansteuerung der Anwahleinheit (5) blockiert, **dadurch gekennzeichnet,**
**dass** die Steuereinheit (8) kontinuierlich und zeitlich entkoppelt vor und von einer An¬steuerung des Empfängers (2) zur Anwahl eines Fernseh- oder Tonrundfunkprogramms einer der verschiedenen Sendeanstal¬ten oder einer Anwahl der Dar¬stellung eines der auf dem Speichermedium (7) oder in der ersten Speichereinheit (6) gespeicherten Fernseh- oder Tonrundfunkprogramme mittels der Anwahleinheit (5) den Vergleich des mindestens einen zweiten Datensatzes in der dritten Speichereinheit (10) mit den in der zweiten Speicherein¬heit (9) gespeicherten Da¬tensätzen vornimmt und im Falle einer Übereinstimmung oder zumindest einer Teilübereinstimmung zwischen dem mindestens einen ab-gespeicherten zweiten Datensatz und einem in der zweiten Speichereinheit (9) gespeicherten Datensatz die Steuereinheit (8) den entsprechenden, in der zweiten Speichereinheit (9) gespeicherten Datensatz markiert,
**dass** im Falle einer Ansteuerung des Empfängers (2) mit¬tels der Anwahleinheit (5) zur Anwahl eines Fernseh- oder Tonrundfunkprogramms einer der verschiedenen Sende¬anstal¬ten oder im Falle der Anwahl der Darstellung eines der auf dem Speichermedium (7) oder in der ersten 4Spei¬chereinheit (6) gespeicherten Fernseh- oder Tonrundfunk¬programms mittels der Anwahleinheit (5) oder der Ansteu¬erung zur Anzeige der Zusatzdaten die Steuereinheit (8) die Ansteuerung des Empfängers (2) oder Anwahl der Dar¬stellung oder der Zusatzdaten nicht vornimmt, wenn der in der zweiten Speichereinheit (9) gespeicherte, dem ange¬wählten Fernseh- oder Tonrundfunkprogramm zugehörige Da¬tensatz markiert ist, dass die Steuereinheit (8) einen in der zweiten Spei¬cherein¬heit (9) gespeicherten Datensatz löscht, wenn das zugehö¬rige Sendedatum und die Sendezeit um mehr als ein einstellbares erstes Zeitdelay überschritten sind oder wenn die Sendeendzeit erreicht und/oder um ein einstell¬bares zweites Zeitdelay überschritten ist, und dass die Steuereinheit (8) einen in der zweiten Spei¬cherein¬heit (9) gespeicherten Datensatz löscht, wenn das zugehö¬rige Fernseh- oder Tonrundfunkprogramm in der ers¬ten Speichereinheit (6) gelöscht ist oder wenn das zuge¬hö¬rige Speichermedium (7) entfernt ist.

2. Elektronisches Gerät (1) nach Patentanspruch 1, da¬durch gekennzeichnet, dass die Zusatzdaten pro¬grammbegleitende Informationen und/oder Metadaten sind und/oder dass der mindestens eine zweite Datensatz min¬destens ein Wort oder ein Begriff oder eine Abkürzung ist.

3. Elektronisches Gerät (1) nach Patentanspruch 1, da¬durch gekennzeichnet, dass die Steuereinheit (8) die Zuordnung des Fernseh- oder Tonrundfunkprogramms zu den jeweiligen Zusatzdaten durch Abspeicherung des Namens und/oder der Servicekennzahlen der Sendeanstalt, des Sen¬dedatums und der Sendezeit und/oder der Sendedauer und/oder der Sendeendzeit zum Da¬tensatz vornimmt.

4. Elektronisches Gerät (1) nach einem der Patentansprü¬che 1 bis 3, dadurch gekennzeich-net, dass die Steuereinheit (8) die Zuordnung des Fern¬seh- oder Ton¬rundfunkprogramms zu den jeweiligen Zusatz¬daten der auf einem Speichermedium (7) oder in der ersten Speicherein¬heit (6) gespeicherten Fernseh- oder Tonrund¬funkprogramme durch eine Zu¬weisung des Speicherortes zum Datensatz vor¬nimmt.

5. Elektronisches Gerät (1) nach einem der vorangehenden Patentansprüche, **dadurch gekennzeichnet, dass** eine Zeitgebereinheit (15) vorhanden ist, anhand welcher die Steuereinheit (8) die aktuelle Systemzeit ermittelt, oder dass die Steuereinheit (8) anhand der von einer Sen¬deanstalt bereitgestellten Zusatzdaten die aktuelle Sys¬temzeit ermittelt.

6. Elektronisches Gerät (1) nach einem der vorangehenden Patentansprüche, **dadurch gekennzeichnet, dass** die Steuereinheit (8) im Falle einer Verhinderung oder eines Nichtzulassens einer Anwahl eines Fernseh- oder Tonrundfunkprogramms einen Hinweis auf der Darstellungs¬einheit (3) einblendet.

7. Elektronisches Gerät (1) nach einem der vorangehenden Patentansprüche, **dadurch gekennzeichnet, dass** die Steuereinheit (8) die Anwahl und/oder Darstellung ei¬nes Fernseh- oder Tonrundfunkprogramms verhindert, wenn keine Zusatzdaten zu diesem Fernseh- oder Tonrundfunkpro-gramm vorhanden sind.

8. Elektronisches Gerät (1) nach einem der vorangehenden Patentansprüche, **dadurch gekennzeichnet, dass** der in der dritten Speichereinheit (10) mittels der Steu¬ereinheit (8) abspeicherbare mindestens eine Datensatz mindestens ein Wort oder ein Begriff oder eine Abkürzung ist und dieses Wort oder dieser Begriff oder diese Abkür¬zung anhand einer im elektronischen Gerät (1) hinterleg¬ten Liste auswählbar ist und/oder über ein Speichermedium (7), das über eine erste Schnittstelle (12) anschließbar ist, einspeicherbar ist und/oder anhand einer über eine zweite Schnittstelle (13) anschließbaren Eingabeeinheit eingebbar ist.

9. Elektronisches Gerät (1) nach einem der vorangehenden Patentansprüche, **dadurch gekennzeichnet, dass** das elektronische Gerät (1) ein Gerät der Unterhaltungs¬elektronik, ein TV-Gerät, ein Satellitensignalempfangsge¬rät, DVB-Empfangsgerät oder ein Teil eines solchen Gerä¬tes ist.

## Claims

1. Electronic apparatus (1) comprising
- a receiver (2) for reception of television programmes or radio broadcast programmes of different stations, wherein
- the receiver (2) includes a tuning unit (4) for tuning the receiver (2) to one of the television or radio broadcast programmes of the different stations and/or
- a first memory unit (6) for storage of television or radio broadcast programmes of different stations and
- a display unit (3) for displaying the television or radio broadcast programmes received by the receiver (2) or for reproduction of television or radio broadcast programmes from television or radio broadcast programmes stored on a storage medium (7) and/or in the first memory unit (6) and
- a selecting unit (5) by means of which the receiver (2) and/or the display unit (3) is or are controllable in such a way that the receiver (2) switches over to one of the television or radio broadcast programmes or the display unit (3) undertakes display of one of the television or radio broadcast programmes stored on the storage medium (7) or in the first memory unit (6) and
- a control unit (8) which stores in a second memory unit (9) the supplementary data, which is transmitted with respect to the television or radio broadcast programmes of different stations, and/or the supplementary data, which is stored on the storage medium (7) or in the first storage unit (6) with respect to the stored television or radio broadcast programmes, in the form of a respective data set in association with the associated television or radio broadcast programme and
- a third memory unit (10) in which at least one second data set can be stored by means of the control unit (8), wherein
the control unit (8) compares the at least one second data set storable in the third memory unit (10) with the data sets stored in the second memory unit (9) and in the case of correspondence blocks activation of the selecting unit (5),
**characterised in that**
the control unit (8) undertakes the comparison of the at least one data set in the third memory unit (10) with the data sets, which are stored in the second memory unit (9), continuously before and decoupled in terms of time from activation of the receiver (2) for selection of a television or radio broadcast programme of one of the different stations or selection of the display of one of the television or radio broadcast programmes, which are stored on the storage medium (7) or in the first memory unit (6), by means of the selecting unit (5) and in the case of correspondence or at least partial correspondence between the at least one stored second data set and a data set stored in the second memory unit (9) the control unit (8) marks the corresponding data set stored in the second memory unit (9), in the case of activation of the receiver (2) by means of the selecting unit (5) for selection of a television or radio broadcast programme of one of the different stations or in the case of selection of display of one of the television or radio broadcast programmes, which are stored on the storage medium (7) or in the first memory unit (6), by means of the selecting unit (5) or the activation for indication of the supplementary data the control unit (8) does not undertake activation of the receiver (2) or selection of the display or the supplementary data if the data set, which is stored in the second memory unit (9) and which is associated with the selected television or radio broadcast programme, is marked, the control unit (8) erases a data set stored in the second memory unit (9) if the associated transmission date and transmission time are exceeded by more than a settable first time delay or if the transmission end time is reached and/or is exceeded by a settable second time delay and
the control unit (8) erases a data set stored in the second memory unit (9) if the associated television or radio broadcast programme in the first memory unit (6) has been erased or if the associated storage medium (7) has been removed.

2. Electronic apparatus (1) according to claim 1, **characterised in that** the supplementary data are programme-accompanying items of information and/or metadata and/or the at least one second data set is at least one word or term or abbreviation.

3. Electric apparatus (1) according to claim 1, **characterised in that** the control unit (8) undertakes association of the television or radio broadcast programme with the respective supplementary data by storage of the name and/or the service designators of the station, the transmission date and the transmission time and/or the transmission duration and/or the transmission end time with respect to the data set.

4. Electronic apparatus (1) according to any one of claims 1 to 3, **characterised in that** the control unit (8) undertakes the association of the television or radio broadcast programmes with the respective supplementary data of the television or radio broadcast programmes, which are stored on a storage medium (7) or in the first memory unit (6) by an allocation of the memory unit to the data set.

5. Electronic apparatus (1) according to any one of the preceding claims, **characterised in that** a time transmitter unit (15) is present, by way of which the control unit (8) determines the current system time, or that the control unit (8) determines the current system time on the basis of the supplementary data provided by a station.

6. Electronic apparatus (1) according to any one of the preceding claims, **characterised in that** the control unit (8) in the case of prevention or non-allowance of selection of a television or radio broadcast programme inserts a reference on the display unit (3).

7. Electronic apparatus (10) according to any one of the preceding claims, **characterised in that** the control unit (8) prevents selection and/or display of a television or radio broadcast programme if no supplementary data with respect to this television or radio programme are present.

8. Electronic apparatus (1) according to any one of the preceding claims, **characterised in that** the at least one data set storable in the third memory unit (10) by means of the control unit (8) is at least one word or term or abbreviation and this word or term or abbreviation is selectable on the basis of a list filed in the electronic apparatus (1) and/or is storable by way of a memory medium (7) connectible via a first interface (12) and/or can be input by way of an input unit connectible via a second interface (13).

9. Electronic apparatus (1) according to any one of the preceding claims, **characterised in that** the electronic apparatus (1) is electronic entertainment equipment, a television set, a satellite signal receiver, a DVB receiver or a part of such equipment, set or receiver.

## Revendications

1. Appareil électronique (1) comprenant
- un récepteur (2) destiné à la réception de programmes télévisés ou radio de divers organismes de radiodiffusion,
- ledit récepteur (2) comportant un syntoniseur (4) pour syntoniser le récepteur (2) sur l'un des programmes télévisés ou radio des divers organismes de radiodiffusion, et/ou
- une première unité de mémoire (6) servant à sauvegarder des programmes télévisés ou radio de divers organismes de radiodiffusion, et
- une unité d'affichage (3) pour l'affichage des programmes télévisés ou radio reçus par le récepteur (2) ou pour la retransmission de programmes télévisés ou radio depuis des programmes télévisés ou radio sauvegardés sur un support de stockage (7) et/ou dans la première unité de mémoire (6), et
- une unité de sélection (5), au moyen de laquelle le récepteur (2) et/ou l'unité d'affichage (3) peuvent être commandés de telle sorte que le récepteur (2) commute sur l'un des programmes télévisés ou radio ou que l'unité d'affichage (3) procède à l'affichage de l'un des programmes télévisés ou radio enregistrés sur le support de stockage (7) ou dans la première
unité de mémoire (6), et
- une unité de commande (8), qui stocke les données supplémentaires transmises pour les programmes télévisés ou radio de divers organismes de radiodiffusion et/ou les données supplémentaires enregistrées sur le support de stockage (7) ou dans la première unité de mémoire (6) pour les
programmes télévisés ou radio sauvegardés,
dans une deuxième unité de mémoire (9), sous la forme d'un ensemble de données associé au programme télévisé ou radio correspondant, et
- une troisième unité de mémoire (10), dans laquelle au moins un deuxième ensemble de données peut être enregistré au moyen de l'unité de commande (8),
l'unité de commande (8) comparant au moins le deuxième ensemble de données pouvant être enregistré dans la troisième unité de mémoire (10) avec les ensembles de données sauvegardés dans la deuxième unité de mémoire (9) et, en cas de concordance, bloquant la commande de l'unité de sélection (5),
**caractérisé en ce que**
l'unité de commande (8), découplée de manière continue et temporelle d'une commande du récepteur (2) pour la sélection d'un programme télévisé ou radio d'un des divers organismes de radiodiffusion ou pour une sélection de l'affichage
d'un des programmes télévisés ou radio enregistrés sur le support de stockage (7) ou dans la première unité de mémoire
effectue au moyen de l'unité de sélection (5) la comparaison d'au moins un deuxième ensemble de données enregistré dans la troisième unité de mémoire (10) avec les ensembles de données sauvegardés dans la deuxième unité de mémoire (9)
et, en cas de concordance ou au moins de concordance partielle entre au moins un deuxième ensemble de données enregistré et un ensemble de données sauvegardé dans la deuxième unité de mémoire (9), l'unité de commande (8) marque l'ensemble de données correspondant, enregistré dans
la deuxième unité de mémoire (9)
et **en ce que**, en cas de commande du récepteur (2) au moyen de l'unité de sélection (5) pour la sélection d'un programme télévisé ou radio
d'un des divers organismes de radiodiffusion ou en cas de sélection de l'affichage d'un des programmes télévisés ou radio enregistrés sur le support de stockage (7) ou dans la première unité de mémoire (6) au moyen de l'unité de sélection (5) ou en cas de commande d'affichage des données supplémentaires,
l'unité de commande (8) ne procédera pas à la commande du récepteur (2) ou à la sélection de l'affichage ou des données supplémentaires
si l'ensemble de données sauvegardé dans la deuxième unité de mémoire (9)
et correspondant au programme télévisé ou radio sélectionné est marqué, **en ce que** l'unité de commande (8) effacera un ensemble de données sauvegardé dans la deuxième unité de mémoire (9),
si la date et l'heure de diffusion correspondante sont dépassées de plus d'un premier délai de temporisation paramétrable ou si l'heure de fin de la diffusion est atteinte et/ou si un deuxième délai de temporisation paramétrable est dépassé, et **en ce que** l'unité de commande (8) effacera un ensemble de données sauvegardé dans la deuxième unité de mémoire (9)
si le programme télévisé ou radio correspondant est effacé de la première unité de mémoire (6) ou si le support de stockage (7) correspondant est retiré.

2. Appareil électronique (1) selon la revendication 1 **caractérisé en ce que** les données supplémentaires correspondent à des informations complémentaires à un programme et/ou des métadonnées et/ou **en ce qu'**au moins un deuxième ensemble de données correspond au moins à un mot, un terme ou une abréviation

3. Appareil électronique (1) selon la revendication 1, **caractérisé en ce que** l'unité de commande (8) procède à l'association du programme télévisé ou radio avec les données supplémentaires concernées via l'enregistrement du nom et/ou des indicateurs de services de l'organisme de radiodiffusion, de la date et l'heure de diffusion et/ou de la durée de la diffusion et/ou de l'heure de fin de la diffusion pour l'ensemble de données.

4. Appareil électronique (1) selon l'une des revendications 1 à 3, **caractérisé en ce que** l'unité de commande (8) procède à l'association du programme télévisé ou radio avec les données supplémentaires concernées des programmes télévisés ou radio sauvegardés sur un support de stockage (7) ou dans la première unité de mémoire (6) en affectant un emplacement mémoire à l'ensemble de données en question.

5. Appareil électronique (1) selon l'une des revendications précédentes, **caractérisé en ce qu'**il dispose d'une unité d'horloge (15) grâce à laquelle l'unité de commande (8) détermine le temps système actuel ou **en ce que** l'unité de commande (8) calcule le temps système actuel
au moyen des données supplémentaires mises à disposition par un organisme de radiodiffusion.

6. Appareil électronique (1) selon l'une des revendications précédentes, **caractérisé en ce que** l'unité de commande (8) affiche un message sur l'unité d'affichage (3)
s'il n'est pas autorisé ou s'il est impossible de sélectionner un programme télévisé ou radio.

7. Appareil électronique (1) selon l'une des revendications précédentes, **caractérisé en ce que** l'unité de commande (8) empêche la sélection et/ou l'affichage
d'un programme télévisé ou radio lorsqu'aucune donnée supplémentaire n'est disponible pour ce programme télévisé ou radio.

8. Appareil électronique (1) selon l'une des revendications précédentes, **caractérisé en ce qu'**au moins un ensemble de données enregistrable au moyen de l'unité de commande (8) dans la troisième unité de mémoire (10) correspond au moins à un mot, un terme ou une abréviation et **en ce que** ce mot, ce terme ou cette abréviation peut être sélectionné à l'aide d'une liste consignée dans l'appareil électronique (1) et/ou par le biais d'un support de stockage (7), qui est raccordable via une première interface (12), enregistrable et/ou saisissable dans une unité d'entrée qui peut être raccordée au moyen d'une deuxième interface (13).

9. Appareil électronique (1) selon l'une des revendications précédentes, **caractérisé en ce que** l'appareil électronique (1)
est un appareil électronique de divertissement, un téléviseur, un
appareil de réception de signaux satellites, un appareil de réception DVB ou un composant d'un tel appareil.
